(19) Europäisches Patentamt

European Patent Office

Office européen des brevets

(11) Veröffentlichungsnummer: **0 663 327 A2**

(12) **EUROPÄISCHE PATENTANMELDUNG**

(21) Anmeldenummer: **94120372.1**

(22) Anmeldetag: **22.12.94**

(51) Int. Cl.⁶: **B60T 8/00**, B60T 13/72,
B60T 13/57

(30) Priorität: **15.01.94 DE 4401082**

(43) Veröffentlichungstag der Anmeldung:
**19.07.95 Patentblatt 95/29**

(84) Benannte Vertragsstaaten:
**DE FR GB IT**

(71) Anmelder: **MERCEDES-BENZ AG**
**Mercedesstrasse 136**
**D-70327 Stuttgart (DE)**

(72) Erfinder: **Rump, Siegfried, Dipl.-Ing.**
**Ziegeleistrasse 38**
**D-71384 Weinstadt (DE)**

(54) **Verfahren zum Vermindern des Ruckens eines Kraftfahrzeuges bei zum Stillstand führenden Bremsvorgängen.**

㊵ Die Erfindung betrifft ein Verfahren zum Vermindern des Ruckens eines Kraftfahrzeugs bei zum Stillstand führenden Bremsvorgängen. Aufgabe der Erfindung ist es, zum Stillstand führende Bremsvorgänge so durchzuführen, daß das Rucken des Fahrzeugs zumindest vermindert wird. Das Rucken des Fahrzeugs wird dadurch vermindert, daß der Bremsdruck im Hauptbremszylinder abgesenkt wird. Das Absenken des Bremsdrucks erfolgt wenn die Fahrzeuggeschwindigkeit einen Geschwindigkeitsschwellenwert für die Fahrzeuggeschwindigkeit unterschreitet, sofern das Bremspedal betätigt ist.

Fig. 1

EP 0 663 327 A2

Die Erfindung betrifft ein Verfahren zum vermindern des Ruckens eines Kraftfahrzeugs bei zum Stillstand führenden Bremsvorgängen für Fahrzeuge mit einer Bremsanlage, wie sie allgemein bekannt ist und beispielsweise dem DE-Buch "Bremsen-Handbuch", 9.1 Auflage, Autohaus-Verlag GmbH, Ottobrunn bei München 1988 entnommen werden kann.

Bei einer derartigen Bremsanlage wird im Hauptbremszylinder in Abhängigkeit der Stellung des Bremspedals ein Bremsdruck erzeugt, der eine Fahrzeugverzögerung bewirkt. Zum Ende jeder Bremsung steigt kurz vor Fahrzeugstillstand durch den Übergang von Gleitreibung zu Haftreibung die Fahrzeugverzögerung an um bei Fahrzeugstillstand schlagartig auf Null abzufallen. Durch diese schlagartige Änderung der Beschleunigung verspüren die Fahrzeuginsassen ein unangenehmes Rucken.

Dabei ist es aus der DE 34 34 793 A1 bekannt, daß es zum verhindern eines Ruckens am Ende eines Bremsvorgangs erforderlich ist, die Verzögerung des Fahrzeugs kontinuierlich zu verringern anstatt einen plötzlichen Übergang von einer Verzögerung auf den Stillstand zu vermeiden. Es wird aber nicht dargestellt, wie eine solche kontinuierliche Verringerung der Verzögerung durchgeführt werden kann. Insbesondere wird nicht dargelegt, welche Veränderungen am Fahrzeug diesbezüglich vorgenommen werden müssen.

Aus der EP 0 435 113 A1 geht eine Fahrzeugbremsanlage hervor, die es erlaubt, in Abhängigkeit beispielsweise der Beladung des Fahrzeugs oder des Vorhandenseins eines Anhängers, die Verstärkung des Bremskraftverstärkers zu verändern. Es wird dadurch erreicht, daß unabhängig von der abzubremsenden Fahrzeugmasse einer Bremspedalstellung stets die gleiche Fahrzeugverzögerung entspricht, sofern ausreichende Reifenhaftung gegeben ist. Bei dieser Fahrzeugbremsanlage ist also ein fester Zusammenhang zwischen der Fußkraft am Bremspedal und dem Bremsdruck im Radbremszylinder nicht mehr vorhanden. Vielmehr erfolgt innerhalb gewisser Grenzen eine Regelung des Bremsdrucks über die Verstärkung im Radbremszylinder.

Aus der gattungsgemäß zugrundegelegten DE 34 46 590 c2 ist darüber hinaus ein Radbremszylinder bekannt, bei dem Nebenkammern angeordnet sind, die es erlauben, die Bremskraftverstärkung zu verändern und somit bei gleichem Pedalweg unterschiedliche Bremsdrücke zu erzeugen.

Aufgabe der Erfindung ist es, zum Stillstand führende Bremsvorgänge in technisch einfach umsetzbarer weise so durchzuführen, daß das Rucken des Fahrzeugs zumindest vermindert wird.

Diese Aufgabe wird bei Zugrundelegung der gattungsgemäßen Bremsanlage durch ein Verfahren gemäß dem Kennzeichen von Anspruch 1 gelöst.

Das Rucken des Fahrzeugs wird dadurch vermindert, daß der Bremsdruck im Hauptbremszylinder abgesenkt wird. Das Absenken des Bremsdrucks erfolgt wenn die Fahrzeuggeschwindigkeit einen Geschwindigkeitsschwellenwert für die Fahrzeuggeschwindigkeit unterschreitet sofern das Bremspedal betätigt ist. Das Absenken des Bremsdrucks erfolgt durch Verringern der Druckdifferenz zwischen der motorseitigen Kammer und der pedalseitigen Kammer des Bremskraftverstärkers. Es gibt zum einen die Möglichkeit, die Druckdifferenz zwischen beiden Kammern des Bremskraftverstärkers und damit die Wirkung des Bremskraftverstärkers völlig aufzuheben. Das kann entweder durch Belüften der motorseitigen Kammer, durch Entlüften der pedalseitigen Kammer oder durch fluidisches Verbinden der beiden Kammern des Bremskraftverstärkers erfolgen. Zum anderen besteht die Möglichkeit, die Wirkung des Bremskraftverstärkers nicht völlig aufzuheben sondern durch geregeltes Verringern der Druckdifferenz, welches nicht zum völligen Druckausgleich der beiden Kammern des Bremskraftverstärkers führt, zu steuern. Tritt in der motorseitigen Kammer ein höherer Druck auf als in der pedalseitigen Kammer des Bremskraftverstärkers, so wird eine der Betätigung des Bremspedals entgegenwirkende Kraft im Bremskraftverstärker erzeugt. In diesem Fall ist die Bremskraft an den Radbremszylinder geringer als die der Stellung des Bremspedals entsprechende Bremskraft ohne Bremskraftverstärkung.

Weitere Ausgestaltungen der Erfindung können den Unteransprüchen entnommen werden. Im übrigen ist die Erfindung an Hand der in der Zeichnung dargestellten Ausführungsbeispiele erläutert; dabei zeigt:

Fig. 1     eine Fahrzeugbremsanlage zur Durchführung eines erfindungsgemäßen Verfahrens,

Fig. 2     eine Anordnung, die es erlaubt, die Verringerung der Bremskraft durch Belüften der motorseitigen Kammer des Bremskraftverstärkers zu erzielen,

Fig. 3     eine Anordnung, die es erlaubt, die Verringerung der Bremskraft durch fluidisches Verbinden der beiden Kammern des Bremskraftverstärkers zu erzielen und

Fig. 4     das Flußdiagramm eines erfindungsgemäßen Verfahrens.

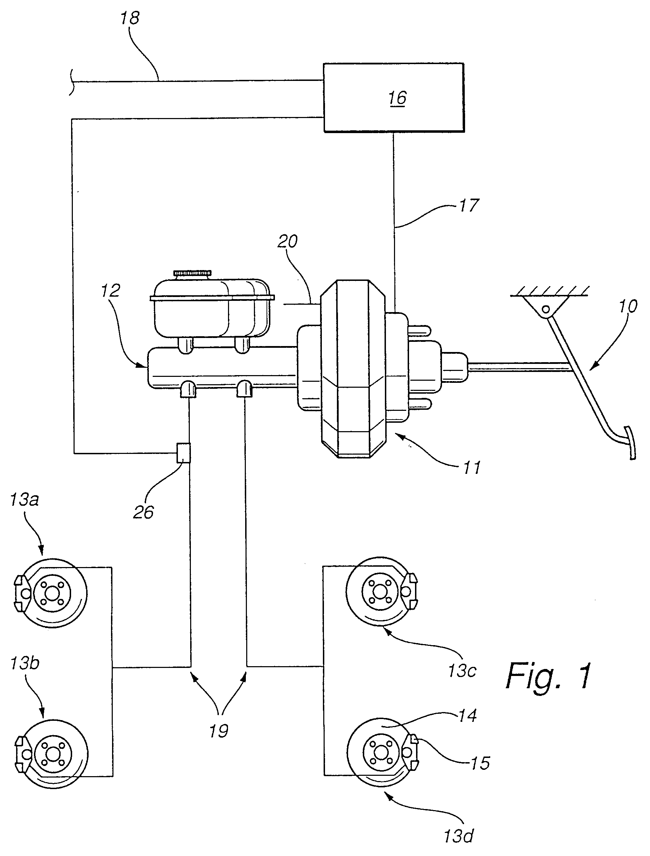

Die Figur 1 zeigt, eine schematische Darstellung einer Fahrzeugbremsanlage, die zur Durchführung des erfindungsgemäßen Verfahrens geeignet ist. Dabei wird die Verminderung des im Hauptbremszylinders erzeugten Bremsdrucks durch eine Veränderung der Bremskraftverstärkung erreicht.

Die Radbremsen 13a, 13b, 13c, 13d bestehen aus jeweils einer Bremsscheibe 14 und einem den Radbremszylinder enthaltenden Bremssattel 15. Die Bremsleitungen 19 verbinden die Bremsen mit dem Hauptbremszylinder 12. Der erzeugte Bremsdruck pB kann im Bedarfsfall beispielsweise durch einen Drucksensor 26 an der einer Bremsleitung 19 gemessen werden und dann an die Steuerung 16 geleitet werden. Der Hauptbremszylinder 12 ist an dem Bremskraftverstärker 11 befestigt. Dem Bremskraftverstärker ist als Unterdruckverstärker ausgebildet und ist über die Leitung 20 fluidisch mit dem Saugrohr, das als Unterdruckguelle dient, verbunden. Das Bremspedal 10 ist mechanisch mit dem Bremskraftverstärker 11 verbunden. Über die Steuerleitung 17 ist die Steuerung 16 mit einem Steuerventil 23 verbunden, das die Bremsdruckverringerung in den Radbremszylindern durch Verringern der Druckdifferenz zwischen den Kammern 24,25 des Bremskraftverstärkers 11 ermöglicht. Ein die Fahrzeuggeschwindigkeit repräsentierendes Signal wird über die Leitung 18 der Steuerung 16 zugeführt. Das die Fahrzeuggeschwindigkeit repräsentierende Signal kann beispielsweise von anderen Steuergeräten, beispielsweise den Steuergerät des Antiblockiersystems, übernommen werden. Die Leitung 18 kann dabei auch als Datenbus ausgebildet sein, über den nicht nur die Fahrzeuggeschwindigkeit sondern auch andere Daten an das Steuergerät 16 übermittelt werden. Der Datenbus kann auch der Übermittlung von Daten von dem Steuergerät 16 zu anderen Steuergeräten genutzt werden.

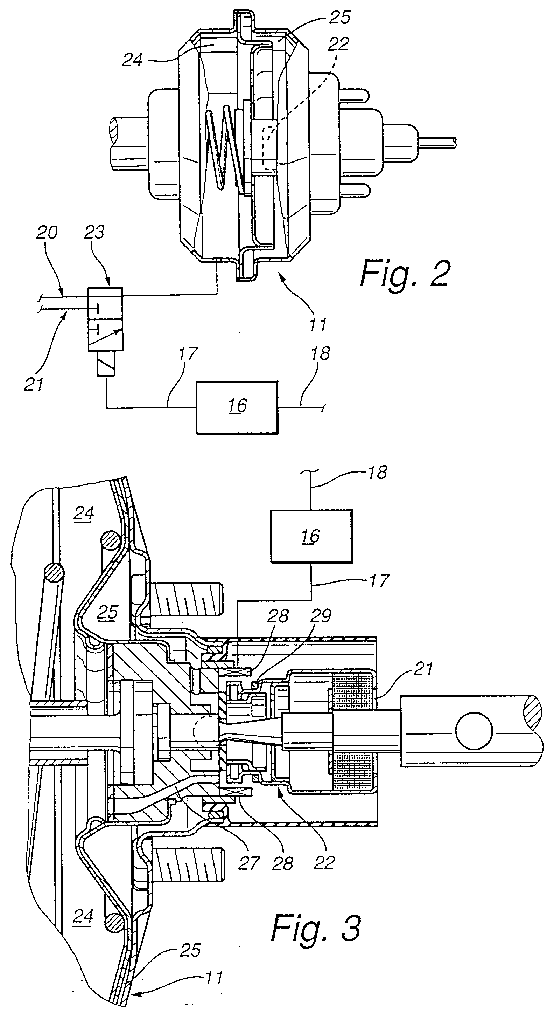

Die Fig. 2 zeigt eine teilgeschnittene Darstellung eines Unterdruckbremskraftverstärkers. Die motorseitige Kammer 25 ist über das Steuerventil 23 und die Leitung 20 mit dem Saugrohr fluidisch verbunden. Die Stellung des nur schematisch dargestellten Steuergehäuses 22 sorgt in üblicher Weise für die Regelung des Drucks zwischen der motorseitigen Kammer 24 und der pedalseitigen Kammer 25 des Bremskraftverstärkers 11. Über die Signalleitung 18 wird dem Steuergerät 16 zumindest ein das die Fahrzeuggeschwindigkeit repräsentierendes Signal zugeführt. Über die Steuerleitung 17 wird das Steuerventil 23 von dem Steuergerät 16 dann betätigt, wenn das Vorliegen einer zum Stillstand führenden Bremsung erkannt wurde. In der Schaltstellung ist sperrt das Schaltventil die Zufuhr des Saugrohrdrucks 20 ab und verbindet die motorseitige Kammer 24 mit einer Zufuhr von Atmosphärendruck 21. Das Steuergehäuse 22 gelangt durch die Veränderung der Druckverhältnisse in eine Stellung, in der, durch weiteres Belüften der pedalseitigen Kammer 25, die Druckdifferenz aufrechterhalten werden soll. Solange das Steuerventil 23 betätigt ist, findet ein Aufbau der Druckdifferenz nicht statt. Wenn eine Erfassung des Drucks in der beiden Kammern des Bremskraftverstärkers erfolgt, so ist es durch geeignetes Schalten des Steuerventils 23 möglich, eine vorgegebene Druckdifferenz zwischen den Kammern zu erzeugen, wenn die pedalseitige Kammer vollständig belüftet ist.

Die Fig. 3 zeigt eine alternative Ausgestaltung, die den Vorteil aufweist, daß das üblicherweise die Druckdifferenzsteuerung zwischen den Kammern übernehmende Steuerventil, das in Form eines Steuergehäuses 22 ausgebildet ist, auch als Steuerventil 23 zur Steuerung der Absenkung der Bremskraftverstärkung dient. Zum gezielten Schalten des Steuergehäuses 22 dient der Schaltmagnet 28. Während der Schaltmagnet 28 nicht bestromt ist, ergibt sich die Stellung des Steuergehäuses 22 aus Druckunterschieden zwischen den Kammern und der Pedalstellung. Wird der Schaltmagnet 28 bestromt, wird das Steuergehäuse 22 mit dem Magneten 29 vom Schaltmagneten 28 abgestoßen und dadurch in eine Stellung bewegt, in der die beiden Kammern des Bremskraftverstärkers über die Verbindungsleitung 27 fluidisch miteinander verbunden sind. Es findet ein zumindest teilweiser Druckausgleich zwischen den Kammern 24,25 des Bremskraftverstärkers statt. Zum Verhindern einer Wiederherstellung der Druckdifferenz, dadurch, daß nach der fluidischen Trennung der beiden Kammern 24,25 - Absperren der Verbindungsleitung 27 durch das Steuergehäuse 22 - eine Belüftung der pedalseitigen Kammer 25 erfolgt - Freigabe der Zufuhr von Atmosphärendruck 21 durch das Steuergehäuse - kann beispielsweise eine Teilbestromung des Schaltmagneten 28 stattfinden

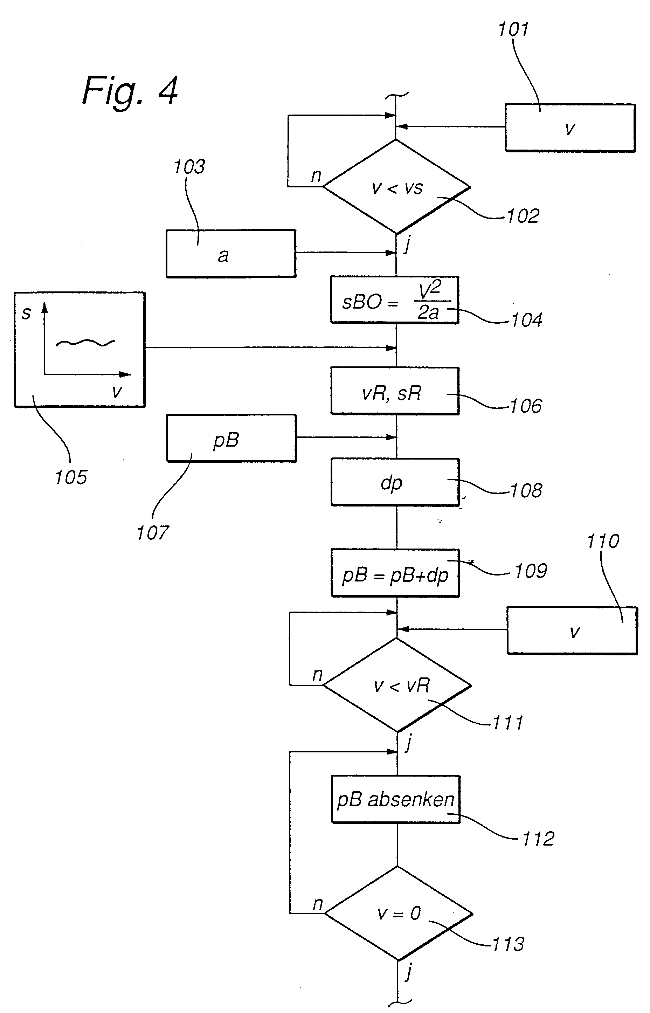

Die Fig. 4 zeigt das Flußdiagramm eines erfindungsgemäßen Verfahrens. Die Geschwindigkeit v des Fahrzeugs wird im Schritt 101 erfaßt. Im Schritt 102 wird überprüft, ob die Geschwindigkeit v einen Geschwindigkeitsschwellenwert vs unterschreitet. Der Geschwindigkeitsschwellenwert liegt unterhalb von 15 km/h. Ein Unterschreiten der Geschwindigkeitsschwelle vs interpretiert die Steuerung als Bremsvorgang, der zum Stillstand des Fahrzeugs führen soll.

Im Schritt 103 wird ein ermittelter Wert der Fahrzeugverzögerung a erfaßt. Der Wert der Fahrzeugverzögerung kann durch direktes Messen oder aber durch numerische Bildung einer Zeitableitung aus den erfaßten Geschwindigkeitswerten ermittelt werden. In vielen Fällen liegt im Fahrzeug ein Geschwindigkeitssignal und ein Fahrzeugverzögerungssignal schon in anderen Steuergeräten (Antiblockiersystem, etc) vor. Sind die Steuergeräte über einen Datenbus miteinander verbunden so können diese Signale übernommen werden. Im Schritt 104 wird der bei konstant bleibender Verzögerung a benötigte Bremsweg sB0 nach der Gleichung :

$$sB0 = \frac{v^2}{2a}$$

bestimmt. Anschließend wird im Schritt 105 aus dem Bremsweg sB0, der Verzögerung a und der Geschwindigkeit v an Hand eines Kennfeldes die Restgeschwindigkeit vR und der Restbremsweg sR ermittelt. Die Restgeschwindigkeit vR ist die Geschwindigkeit, bei der das Absenken der Bremskraft erfolgen soll; der Restbremsweg sR ist der Bremsweg, der bei abgesenkter Bremskraft benötigt wird um das Fahrzeug aus der Restgeschwindigkeit vR zum Stillstand zu bringen.

Gemäß Schritt 107 wird der Steuerung ein den Bremsdruck pB repräsentierendes Signal zugeführt. Daraus wird im Schritt 108 der zusätzliche Bremsdruck dp berechnet, der notwendig ist, um das Fahrzeug unter Berücksichtigung des Restbremsweges sR mit dem Bremsweg sB0 aus der Geschwindigkeit v zum Stillstand zu bringen. gemäß Schritt 109 wird als Bremsdruck pB der um den zusätzlichen Bremsdruck dp erhöhte Bremsdruck pB erzeugt.

Gemäß dem Schritt 110 wird ein neuer Wert für die Geschwindigkeit v des Fahrzeugs eingelesen. Im Schritt 111 wird überprüft ob die aktuelle Geschwindigkeit die Restgeschwindigkeit vR unterschreitet. Ist das nicht der Fall, wird zum Schritt 110 zurückgesprungen. Sobald die Fahrzeuggeschwindigkeit v die Restgeschwindigkeit vR unterschreitet wird gemäß Schritt 112 der Bremsdruck pB abgesenkt. Dies erfolgt zum Beispiel durch die Betätigung des Schaltventils 23. Dadurch wird die Druckdifferenz zwischen der motorseitigen Kammer 24 und der pedalseitigen Kammer 25 verringert. Sofern der Bremskraftverstärker nicht ausgesteuert ist, also die pedalseitige Kammer vollständig belüftet ist, oder sofern die pedealseitige Kammer gleichzeitig entlüftet wird, kann der Druck in der motorseitigen Kammer größer werden als der Druck in der pedalseitigen Kammer des Bremskraftverstärkers. Dann wird eine der Betätigung des Bremspedals entgegenwirkende Kraft erzeugt. Im Schritt 113 wird überprüft, ob der Stillstand des Fahrzeugs erreicht wurde. Ist dies nicht der Fall so wird zum Schritt 112 zurückgesprungen, der abgesenkte Bremsdruck pB wird entweder nach jedem Durchlaufen des Schritts 113 weiter abgesenkt oder nach dem einmaligen Absenken auf konstantem Wert gehalten. Sobald im Schritt 113 der Stillstand des Fahrzeugs festgestellt wurde, ist das Verfahren beendet. Im übrigen wird das Verfahren spätestens dann beendet, wenn der Fahrer durch Betätigen des Gaspedals das Fahrzeug wieder beschleunigt.

**Patentansprüche**

1. Verfahren zum Vermindern des Ruckens eines Kraftfahrzeugs bei zum Stillstand führenden Bremsvorgängen, wobei die Bremsanlage des Kraftfahrzeugs einen Hauptbremszylinder einen Bremskraftverstärker und ein Bremspedal aufweist, wobei in Abhängigkeit der Stellung des Bremspedals im Hauptbremszylinder mittels eines Bremskraftverstärkers ein Bremsdruck erzeugt wird und wobei sich aufgrund des erzeugten Bremsdrucks eine Fahrzeugverzögerung ergibt,
daß durch eine Steuerung (16) bei betätigtem Bremspedal (10) und bei gleichzeitigem Unterschreiten eines vorgegebenen Geschwindigkeitsschwellenwertes (vs) für die Fahrzeuggeschwindigkeit (v) ein in Abhängigkeit der Stellung des Bremspedals (10) ermitteltes Absenken des im Hauptbremszylinder (12) erzeugten Bremsdrucks (pB) erfolgt
**dadurch gekennzeichnet,**
daß das Absenken des Bremsdrucks (pB) im Hauptbremszylinder (12) durch Verringerung der Druckdifferenz zwischen pedalseitiger Kammer (25) und motorseitiger Kammer (24) des Bremskraftverstärkers (11) erfolgt,
wobei die Verringerung der Druckdifferenz durch Belüften der motorseitigen Kammer (24) des Bremskraftverstärkers (11) und/oder durch Entlüften der pedalseitigen Kammer (25) des Bremskraftverstärkers (11) erfolgt.

2. Verfahren nach Anspruch 1,
**dadurch gekennzeichnet,**
daß in der motorseitigen Kammer (24) des Bremskraftverstärkers (11) ein höherer Druck als in der pedalseitigen Kammer (25) erzeugt wird.

3. Verfahren nach Anspruch 1,
**dadurch gekennzeichnet,**
daß das Absenken des im Hauptbremszylinder (12) erzeugten Bremsdrucks (pB) auf einen in der Steuerung (16) bestimmten Anteil des vor dem Absenken bestehenden Bremsdrucks (pB) erfolgt.

4. Verfahren nach Anspruch 3,
**dadurch gekennzeichnet,**
daß der Anteil in der Steuerung (16) zumindest in Abhängigkeit der Fahrzeugverzögerung (a) ermittelt wird.

5. Verfahren nach Anspruch 4,
**dadurch gekennzeichnet,**
daß der Anteil in der Steuerung in Abhängigkeit zumindest einer der Größen

- Bremsdruck (pB) im Hauptbremszylinder (12),
- Druck in der pedalseitigen Kammer (25) des Bremskraftverstärkers (11),
- Druck in der motorseitigen Kammer (25) des Bremskraftverstärkers (11) oder der auf das Bremspedal (10) einwirkenden Betätigungskraft ermittelt wird.

6. Verfahren nach einem der Ansprüche 1,2, 4 oder 5,
   **dadurch gekennzeichnet,**
   daß der Geschwindigkeitsschwellenwert (vs) weniger als 15 km/h beträgt.

7. Verfahren nach Anspruch 1,
   **dadurch gekennzeichnet,**
   daß im Fahrzeug vorhandene bremsdruckregelnde Steuergeräte zur Steuerung des Absenkens des Bremsdrucks (pB) im Hauptbremszylinder (12) verwendet werden.

8. Verfahren nach Anspruch 1,
   **dadurch gekennzeichnet,**
   daß beim überschreiten eines Verzögerungsschwellenwertes für die Fahrzeugverzögerung das Absenken des im Hauptbremszylinder (12) erzeugten Bremsdrucks (pB) unterbleibt.

9. Verfahren nach Anspruch 1,
   **dadurch gekennzeichnet,**
   daß die durch das Absenken des Bremsdrucks (pB) entstehende Verlängerung des Bremswegs ermittelt wird und daß diese Verlängerung durch eine, vor dem Absenken des Bremsdrucks erfolgende, gegenüber der bis zum Stillstand des Fahrzeugs verbleibenden Zeit kurzzeitige Erhöhung des Bremsdrucks (pB) kompensiert wird.

10. Verfahren nach Anspruch 11,
    **dadurch gekennzeichnet,**
    daß die Ermittlung der Verlängerung des Bremswegs aus der Fahrzeugverzögerung (a) und Fahrzeuggeschwindigkeit (v) unter Verwendung von Kennfeldern erfolgt.

*Fig. 1*

*Fig. 2*

*Fig. 3*

# Fig. 4

$$sBO = \frac{V^2}{2a}$$